Europäisches Patentamt

European Patent Office

Office européen des brevets

(19)

(11) Veröffentlichungsnummer: **0 264 342 B1**

(12) # EUROPÄISCHE PATENTSCHRIFT

(45) Veröffentlichungstag der Patentschrift:
13.06.90

(51) Int. Cl.⁵: **E06B 1/60**

(21) Anmeldenummer: 87630205.0

(22) Anmeldetag: 15.10.87

(54) **Einstellbare Befestigungsvorrichtung zum Zusammenfügen von zwei Bauteilen.**

(30) Priorität: 17.10.86 LU 86631

(43) Veröffentlichungstag der Anmeldung:
20.04.88 Patentblatt 88/16

(45) Bekanntmachung des Hinweises auf die Patenterteilung:
13.06.90 Patentblatt 90/24

(84) Benannte Vertragsstaaten:
AT DE GB SE

(56) Entgegenhaltungen:
DE-A- 3 320 297
DE-U- 8 601 106
GB-A- 1 244 498
GB-A- 2 145 184
NO-B- 151 383
US-A- 3 992 833
US-A- 4 038 801

(73) Patentinhaber: INNOTECH S.A., 14, rue Aldringen,
Luxembourg(LU)

(72) Der Erfinder hat auf seine Nennung verzichtet

(74) Vertreter: Waxweiler, Jean et al, OFFICE DENNEMEYER
S.à.r.l. P.O. Box 1502, L-1015 Luxembourg(LU)

## Beschreibung

Die vorliegende Erfindung betrifft eine stellbare Befestigungsvorrichtung, vorzugsweise aus Metall, zum Zusammenfügen von zwei Bauteilen, mit einem Halterungselement, das in einem angepassten Loch im Bauteil an der Seite des Bauteils, die dem Bauteil gegenüberliegt, eingebaut werden kann, wobei das Halterungselement mit Innengewinde versehen ist und einen Kragen hat, mit einem Kraftübertragungselement, das mindestens teilweise mit Aussengewinde versehen und in das Halterungselement einschraubbar ist und ein durchgehendes Loch mit einem Anschlag oder dergleichen an einem Ende aufweist, wobei das Loch im übrigen ganz oder gar teilweise mit vieleckigem Querschnitt gestaltet ist und das Halterungselement aus einem verhältnismässig schmalen hülsenartigen Ring besteht.

Die Verwendung einstellbarer Befestigungsvorrichtungen, insbesondere für Einfassungen, Fenstern, Türen, Rahmen oder dergleichen in den entsprechenden Durchbrüchen in Bauten usw., ist bekannt. So beschreibt die GB-PS No. 1 244 498 eine Befestigungsvorrichtung, mittels welcher die Lage der Fenstereinfassung gegenüber dem umgebenden Bau genau eingestellt und die Fenstereinfassung gleichzeitig am Bau befestigt werden kann. Das einstellbare Befestigungselement gemäss dieser Patentschrift ist im wesentlichen dadurch gekennzeichnet, dass es aus einem Aussengewinde aufweisenden Zapfen besteht, der einstellbar in ein mit durchgehenden Gewinden versehenen Loch in der Fenstereinfassung eingesetzt ist. Der mit Gewinde versehene Zapfen ragt aus der dem umgebenden Bau zugewandten Seitenfläche der Fenstereinfassung hervor, und bei eingebauter Einfassung liegt das Zapfende am erwähnten Bau an. Der Zapfen weist ein mittiges durchgehendes Loch auf, durch welches zum Schluss ein Nagel geführt wird, um dann in den umgebenden Bau eingetrieben zu werden. Dabei wird der Zapfen und damit auch die Fenstereinfassung endgültig am umgebenden Bau befestigt. Das mit durchgehenden Gewinden versehene Loch besteht laut dem erwähnten Patent ganz einfach aus einem mit Gewinde versehenen Loch in der Fenstereinfassung an sich oder aus einem mit Innengewinde versehenen, in der Fenstereinfassung eingesetzten Futter.

Es leuchtet ein, dass die durchgehenden, mit Gewinde versehenen Löcher in einer Fenstereinfassung, wie die in der GB-PS No. 1 244 498 beschrieben sind, eine wesentliche Schwächung der mechanischen Festigkeit der Fenstereinfassung in den Bereichen der Löcher bedeutet. Auch wird es oft erforderlich sein, Fenstereinfassungen, usw. nach längerer Zeit nach dem Einbau nachzustellen. Bei derartigem Nachstellen treten beim Drehen des stellbaren Zapfens sehr hohe Kräfte auf, und falls das mit Gewinde versehene Loch, wie es in der GB-PS No. 1 244 498 erwähnt ist, aus einem Futter besteht, wird sich dieses Futter höchst wahrscheinlich von seiner Fixierung an der Fenstereinfassung an sich losreissen.

In dem NO Patent No. 151.383 ist ein Befestigungselement beschrieben, das in grossem Masse die Schwächung der Fenstereinfassung durch grosse durchgehende Löcher vermeidet. Auch hält dieses Befestigungselement den beim Nachstellen desselben auftretenden hohen Kräfte stand. Dieses Befestigungselement ist von der Art, die ein Halterungselement umfasst, das in einer entsprechenden Aussparung in der dem Bau zugewandten Seitenfläche der Einfassung oder des Rahmens eingebaut ist. Von der erwähnten Aussparung führt ein Loch mit verhältnismässig geringem Durchmesser zur entgegengesetzten Seitenfläche der Einfassung oder des Rahmens. Das Halterungselement weist ein mit Innengewinde versehenes durchgehendes Loch auf. Das Befestigungselement besteht ferner aus einem aussen teilweise mit Gewinde versehenen und ein durchgehendes Loch aufweisenden Druckelement. Eine Schraube oder ein ähnliches Befestigungsmittel dient der Befestigung des Befestigungselementes am Bau. Das Befestigungselement ist im wesentlichen dadurch gekennzeichnet, dass es ausserdem aus einem Verriegelungsring zur Fixierung des Halterungselements im Rahmen oder dergleichen besteht, und dass das Innenloch des Druckelements einen Anschlag im untersten, dem Bau am nächsten liegenden Teil aufweist, und dass das Loch im übrigen ganz oder teilweise mit einem vieleckigen Querschnitt ausgebildet ist.

Bei einer besonders vorgezogenen Ausführungsform des in dem NO Patent No. 151 383 beschriebenen Befestigungselementes besteht der Teil des Halterungselements der ganz innen in der Aussparung liegt aus einem Kopf und der das Halterungselement umgebende Verriegelungsring ist im innersten Bereich geschlitzt.

Das Druckelement, d.h. der mit dem Aussengewinde versehenen Zapfen, dessen Kopf gegen die Fläche des Durchbruchs im Bau aufliegt, ist normalerweise mittels einer Schraube am Bau befestigt, wobei der Schraubenkopf auf einen Anschlag aufliegt, der sich so weit drinnen im durchgehenden Innenloch des Druckelements befindet, dass der Teil des Lochs der gegen das Innere der Einfassung bzw. des Rahmens liegt bei montierter Schraube frei bleibt. Der letzte Abschnitt des Lochs dient zur Einführung eines Werkzeuges, mit welchem das Druckelement nach Lösen der erwähnten Schraube gedreht und eingestellt werden kann.

Das in der NO-PS-151 383 beschriebenen Befestigungsvorrichtung ist es u.a. erforderlich zwei Bohrungen im Rahmen auszunehmen, d.h. eine Bohrung zur Schaffung des erwähnten verhältnismässig engen durchgehenden Lochs im Rahmen, und eine zweite Bohrung zur Schaffung einer breiteren Aussparung zur Aufnahme des erwähnten Halterungselements mit dem es umgebenden Verriegelungsring. Zusätzlich zu den beiden unterschiedlichen Bohrungsarbeiten die durchgeführt werden sollten, ist es einleuchtend, dass die breitere Aussparung im Rahmen, die das Halterungselement aufnehmen soll, eine gewisse Schwächung des Rahmens an sich bewirkt.

In der LU-PS 86 251 ≡ DE–U–8 601 106.5 ist eine Befestigungsvorrichtung das eine Verbesserung des in der NO-PS 151 383 beschriebenen Befestigungsvorrichtung ist. Bei dieser Befestigungsvorrichtung besteht das Halterungselement aus einem metallischen Werkstoff und derart gestaltet ist, dass es sich beim Einbau in dem erwähnten durchgehenden Loch in dem einen Bauteil selbsttätig verriegelt. Durch die Ausbildung des Halterungselements aus Metall, kann eine so dünnwandige Abmessung gewählt werden, dass das Halterungselement direkt in das verhältnismässig schmale durchgehende Loch in dem einen Bauteil eingesetzt werden kann. Hierdurch wird der Verriegelungsring beseitigt, der laut der NO-PS 151.383 erforderlich ist. Die einstellbare Befestigungsvorrichtung besteht vorzugsweise aus Metall. Sie besteht aus einem Halterungselement, das in ein angepasstes durchgehendes Loch in einem von zwei zusammenzufügenden Bauteil auf der Seite des einen Bauteils, die dem anderen Bauteil zugewendet ist, eingebaut. Das Halterungselement ist mit einem Innengewinde versehen. Die Befestigungsvorrichtung besteht ferner aus einem Kraftübertragungselement, das teilweise mit Aussengewinde versehen ist, um in das erwähnte Halterungselement eingeschraubt zu werden. Das Kraftübertragungselement hat ein durchgehendes Loch, welches einen Anschlag für einen Schraubenkopf oder dergleichen an einem Ende hat, wobei das Loch im übrigen ganz oder teilweise mit einem Vieleckquerschnitt gestaltet sein kann. Das Halterungselement besteht aus einem verhältnismässig engen hülsenartigen Ring, von dem mehrere zungen- oder ohrenartige Teile hervorstehen, die eine Verriegelung des Halterungselements an einem Bauteil bewirken. Die Befestigungsvorrichtung ist im wesentlichen dadurch gekennzeichnet, dass die zungen- oder ohrenartigen Teile gewellte Randflächen aufweisen und zur lotrechten Mittellinie des erwähnten hülsenartigen Rings etwas schräg gestellt sind.

Alle hier geschilderten Befestigungsvorrichtungen sind bei ein aus Hohlprofilen, insbesondere Kunststoffhohlprofilen und mit hohlen Metallprofilen verstärkten hohlen Kunststoffprofilen bestehenden Einfassungen, Rahmen und dergleichen nicht verwendbar, da sie keine stabile Befestigung der Einfassung,des Rahmens oder dergleichen in Durchbrüchen von Bauten ermöglichen.

Die Aufgabe der Erfindung ist es eine für aus solchen Hohlprofilen bestehenden Einfassungen, Rahmen und dergleichen geeignete einstellbare Befestigungsvorrichtung der eingangsgenannten Art zu schaffen.

Diese Aufgabe wird dadurch gelöst, dass das mit Innengewinde versehene Halterungselement eine von seiner Umfangsfläche radial abstehende, in axialer Richtung auf Abstand von dem Kragen angeordnete Lippe und eine in der Ebene des Kragens der Lippe gegenüberliegende Lasche mit einem Loch hat.

Vorteilhafte Ausführungsformen der Befestigungsvorrichtung sind in den Unteransprüchen beschrieben.

Die Erfindung wird nun an Hand der beiliegenden Zeichnungen beispielsweise beschrieben. In den Zeichnungen sind:

Fig. 1 eine perspektivische Darstellung der beiden Teile des Befestigungselementes an sich und einer Schraube;

Fig. 2 das Befestigungselement und die Schraube fertig eingebaut zum Zusammenfügen eines aus einem Kunststoffhohlprofil bestehenden Bauteiles mit einem zweiten Bauteil; und

Fig. 3 das Befestigungselement und die Schraube fertig eingebaut zum Zusammenfügen eines aus einem mit einem metallischen Hohlprofil verstärkten Kunststoffhohlprofil bestehenden Bauteiles mit einem zweiten Bauteil.

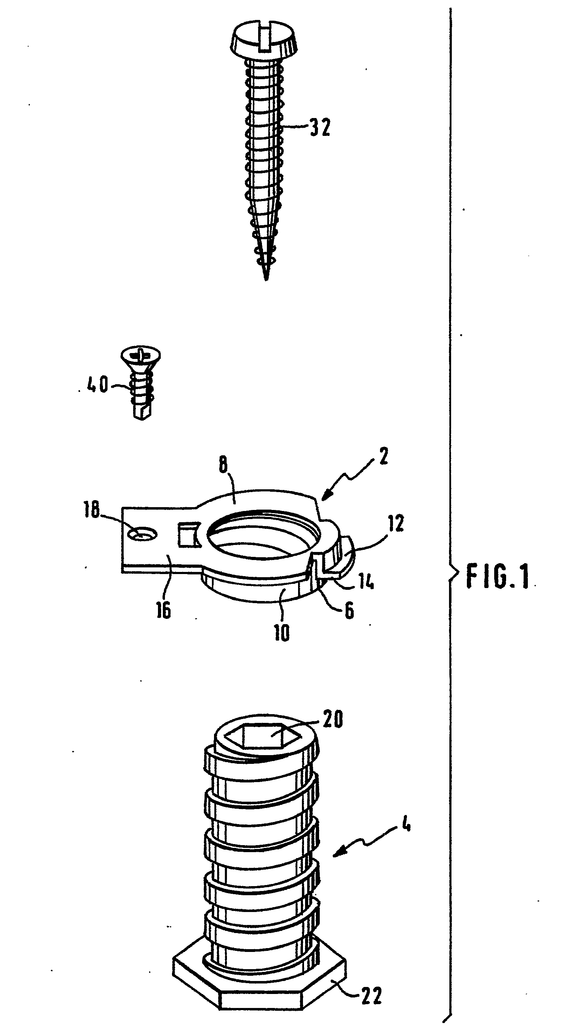

Fig. 1 zeigt die aus einem Halterungselement 2 und einem Kraftübertragungselement 4 bestehende Befestigungsvorrichtung nach der Erfindung. Das Halterungselement 2 besteht aus einem hülsenartigen Ring 6 mit einem Kragen 8 und von der Umfangsfläche 10 des Ringes 6 radial abstehende Lippe 12, die Teil eines sich von der Ebene des Kragens 8 sich axial entlang der Umfangsfläche 10 des Ringes 6 erstreckenden Teiles 14 ist. Das Halterungselement 2 ist mit Innengewinde versehen. Der Kragen 8 geht an der der Lippe 12 diametral gegenüberliegenden Seite in eine Lasche 16 über, in der ein Loch 18 vorgesehen ist. Das Kraftübertragungselement 4 hat ein durchgehendes Loch 20, das zumindest an seinem in Fig. 1 obenen Ende vieleckig gestaltet ist, und das am anderen in Fig. 1 unteren Ende einen ebenfalls vieleckigen Kopf 22 aufweist.

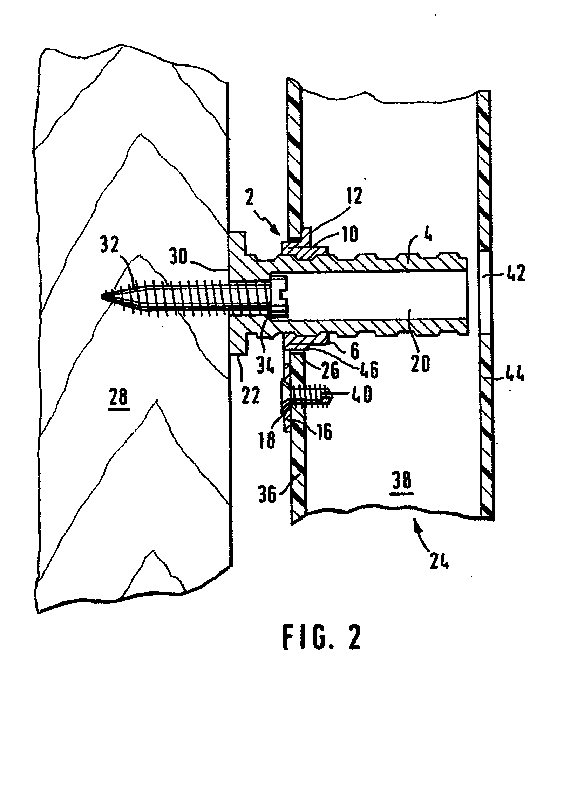

Fig. 2 zeigt eine Befestigungsvorrichtung in fertig eingebautem Zustand in einem aus einem Hohlprofil, insbesondere Kunststoffhohlprofil bestehenden Bauteil 24. Das Halterungselement 2 ist in einem Loch 26 im Bauteil 24 eingebaut. Das Kraftübertragungselement 4 ist in dem Halterungselement 2 eingeschraubt und liegt mit seinem Kopf 22 gegen den zweiten Bauteil 28 an. Ein erhöhter kreisförmiger Rand 30 ist mit dem Bauteil 24 in Eingriff. Das Kraftübertragungselement ist mittels einer Schraube 32 am Bauteil 24 fixiert. Der Kopf der Schraube 32 liegt im Loch 20 des Kraftübertragungselementes 4 an einem Anschlag 34 an.

Beim Einbau der Befestigungsvorrichtung in den Bauteil 24 wird aus den beiden Teilen bestehende Befestigungsvorrichtung in das ausgebohrte Loch 26 im Bauteil 24 hineingesteckt, so dass die Lippe 12 sich unter die Profilwand 36 des Hohlprofils 38 schiebt und der Kragen 8 und die Lasche16 auf der Wand 36 aufliegen. Die Lasche 16 wird mittels einer Schraube 40 mit dem Hohlprofil verschraubt. Wenn der Bauteil 24 später mit dem Bauteil 28 zusammengefügt werden soll, ist eine Drehung des Kraftübertragungselementes 4 erforderlich. Bei diesem Drehen wird Kraft auf das Halterungselement 2 übertragen, und die Lasche 16 und die Schraube 40 verhindern, dass sich das Halterungselement im Loch 26 drehen kann. Ein Loch 42 ist an der Profilwand 44 vorgesehen, um ein Werkzeug in das Loch 20 des Kraftübertragungselementes 4 zur Drehung desselben einführen zu können. Wenn die Drehung des Kraftübertragungselements 4 beendet ist, kann die Schraube 32 festgeschraubt werden.

Die Lippe 12 und die Lasche 16 mit der Schraube 40 dienen zur Aufnahme der beim Befestigen des Bauteiles 24 am Bauteil 28 mit der erfindungsgemässen Vorrichtung in axialer Richtung derselben auftretenden Kräfte.

Aus der Lasche 16 ist eine Zunge 46 herausgestanzt und gegen die Umfangsfläche 10 des Ringes 6 umgebogen. Weil das Loch 26 im Bauteil 24 wegen des L-förmigen Teiles 14 etwas grösser gebohrt werden muss wie der Durchmesser des Ringes 6, bewirkt die dem L-förmigen Teil 14 diametral gegenüberliegende Zunge 46 eine Stabilisierung des Halterungselementes im Loch 26. Es ist durchaus vorstellbar, dass die Lippe 12 an der Umfangsfläche 10 angeformt ist; dann erübrigt sich zumindest bei dünnwandigen Hohlprofilen die Zunge 46.

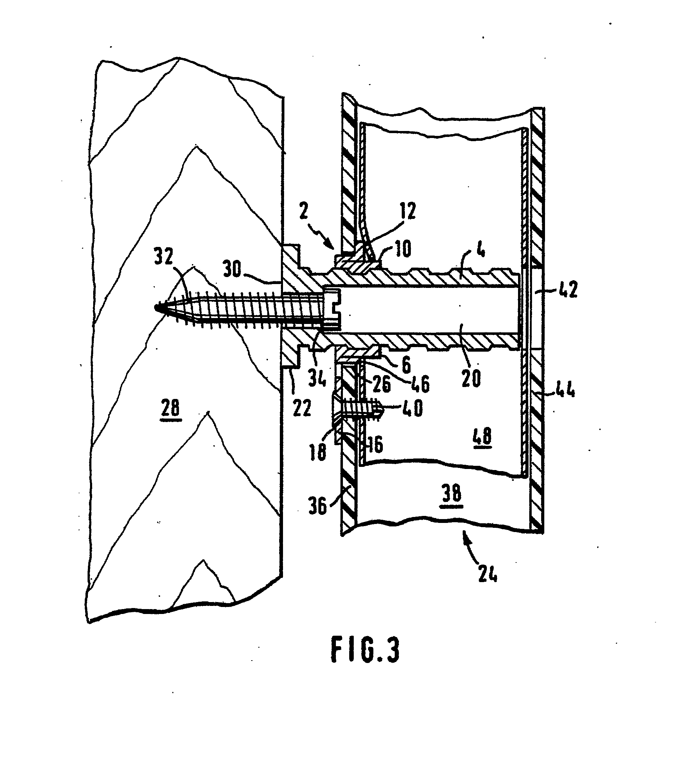

Bei grossen Einfassungen, Rahmen und dergleichen, werden mit Metallhohlprofilen verstärkte Kunststoffhohlprofile eingesetzt. Der Einbau der eines aus einem solchen verstärkten Hohlprofil hergestellten Rahmens ist in der Fig. 3 dargestellt. Die Fig. 2 unterscheidet sich von der Fig. 1 nur durch den Hohlprofil 48 aus Metall. Die Schraube 40 dient hier gleichzeitig für die bei verstärkten Kunststoffhohlprofilen übliche Verschraubung von Metallhohlprofil und Kunststoffhohlprofil. Da zwischen den beiden Hohlprofilen ein leichtes Spiel besteht, greift die Lippe 12 zwischen die beiden Hohlprofile.

## Patentansprüche

1. Einstellbare Befestigungsvorrichtung, vorzugsweise aus Metall, zum Zusammenfügen von zwei Bauteilen (24, 28), mit einem Halterungselement (2), das in einem angepassten Loch im Bauteil (24) an der Seite des Bauteils (24), die dem Bauteil (28) gegenüberliegt, eingebaut werden kann, wobei das Halterungselement (2) mit Innengewinde versehen ist, und einen Kragen (8) hat, mit einem Kraftübertragungselement (4), das mindestens teilweise mit Aussengewinde versehen und in das Halterungselement (2) einschraubbar ist und ein durchgehendes Loch (20) mit einem Anschlag (34) oder dergleichen an einem Ende aufweist, wobei das Loch (20) im übrigen ganz oder teilweise mit vieleckigem Querschnitt gestaltet ist und das Halterungselement (2) aus einem verhältnismässig schmalen hülsenartigen Ring (6) besteht, dadurch gekennzeichnet, dass das mit Innengewinde versehene Halterungselement (2) eine von seiner Umfangsfläche radial abstehende, in axialer Richtung auf Abstand von dem Kragen angeordnete Lippe (12) und eine in der Ebene des Kragens (8) der Lippe (12) gegenüberliegende Lasche (16) mit einem Loch (18) aufweist.

2. Befestigungsvorrichtung nach Anspruch 1, dadurch gekennzeichnet, dass die Lippe (12) Teil eines sich von der Kragenseite aus erstreckenden L-förmigen Teiles (14) ist und, dass aus der Lasche (16) eine zum Umfangsfläche hin umgebogene Zunge (46) ausgestanzt ist.

3. Befestigungsvorrichtung nach Anspruch 2, dadurch gekennzeichnet, dass die Zunge (46) und/oder der L-förmige Teil an der Umfangsfläche des Halterungselements angeformt sind.

## Claims

1. Adjustable fastening means, preferably of metal, for assembling two construction parts (24, 28), with a mounting element (2) which can be built into a matching hole in the construction part (24) at the side of the construction part (24) opposite the construction part (28), whereby the mounting element (2) is provided with in inside thread and a collar (8), comprising a force-transfer member (4), which is provided, at least partially, with an exterior thread and can be screwed into the mounting element (2), and has a continuous hole (2) including a stop (34) or the like at one end, whereby the hole (20) has, in its entirety or partially, a polygonal cross-section, and the mounting element (2) is composed of a relatively small sleeve-like ring (6), characterised in that the mounting element (2) with inside thread has a lip (12), in the axial direction at a distance from the collar, and an extension (16) in the plane of the collar (8) of the lip (12), including a hole (18).

2. Fastening means according to claim 1, characterised in that the lip (12) is part of an L-shaped section, extending from the side of the collar, and that a tongue (46), bent towards the peripheral surface, is punch out from the extension (16).

3. Fastening means according to claim 2, characterised in that the tongue (46) and/or the L-shaped section are fitted onto the peripheral surface of the mounting element.

## Revendications

1. Dispositif de fixation réglable, de préférence en métal, pour assembler deux parties de construction (24, 28), comportant un organe de fixation (2) qui peut être monté dans un trou adapté situé dans la pièce de construction (24), sur le côté de la pièce de construction (24) qui se trouve en face de la pièce de construction (28), l'organe de fixation (2) étant muni d'un filetage intérieur et d'une collerette (8), et comportant un organe de reprise de l'effort (4), muni, au moins en partie, d'un filetage extérieur, pouvant être vissé dans l'organe de fixation (2) et présentant un trou traversant (20) qui comporte une butée (34) ou similaire à l'une de ses extrémités, le trou (20) ayant par ailleurs, totalement ou bien en partie, une section polygonale et l'organe de fixation (2) étant constitué d'un anneau (6) relativement étroit en forme de douille, caractérisé en ce que l'organe de fixation (2) muni d'un filetage intérieur présente une lèvre (12) partant radialement de sa surface périphérique, et disposée à une certaine distance, dans la direction axiale, de la collerette, et une patte (16), comportant un alésage (18), disposée du coté opposé à la lèvre (12) dans le plan de la collerette (8).

2. Dispositif de fixation suivant la revendication 1, caractérisé en ce que la lèvre (12) est une partie d'une pièce en forme de L (14) s'écartant latéralement de la collerette et en ce qu'une languette (46), repliée sur la surface périphérique, est matricée à partir de la patte (16).

3. Dispositif de fixation suivant la revendication 2, caractérisé en ce que la languette (46) et/ou la pièce en forme de L présente une forme adaptée à la surface périphérique de l'organe de fixation.

32

40

8
2
18
12
14
16
6
10

20

4

22

FIG.1

FIG. 2

FIG.3